# DEMANDE DE BREVET EUROPEEN

(11) **EP 1 292 088 A1**
(43) Date de publication de la demande: **12.03.2003**
(21) Numéro de dépôt: 02292140.7
(22) Date de dépôt: 29.08.2002
(51) Int. Cl.: H04M 3/42, H04Q 3/72, H04M 1/57

(54) **Dispositif d'indication d'appel à un abonné absent**

(30) Priorité: 06.09.2001 FR 0111555
(71) Demandeur: FRANCE TELECOM, 75015 Paris (FR)
(72) Inventeur: Joly, Hervé, 92120 Montrouge (FR)
(74) Mandataire: Habasque, Etienne Joel Jean-François

(57) **Abrégé**

L'invention concerne un procédé et un dispositif pour indiquer à un abonné absent qu'il a reçu un appel et qu'il n'y a pas été répondu. Suivant l'invention, on mémorise dans une mémoire le numéro (y1) du dernier appelant ayant appelé ledit numéro (x1) d'appel. On transfère, après chaque mémorisation, le numéro (y1) mémorisé à une base (BD) de données, on stocke dans la base (BD) de données, des numéros transférés, on envoie, à un numéro de contact un message contenant une indication associée à au moins un numéro (y1) d'appelant stocké dans la base (BD) de données.

## Description

La présente invention concerne un procédé et un dispositif d'indication à un abonné du téléphone qu'un numéro d'appel a été appelé.

Cette indication constitue une facilité offerte aux abonnés.

On connaît de telles facilités, permettant :
- d'afficher le numéro téléphonique d'un appelant sur le terminal appelé et du nom de l'appelant, si ceux-ci ont été au préalable mémorisés dans le terminal ;
- que l'abonné appelant laisse à l'abonné appelé, en cas d'absence de réponse de celui-ci, un message vocal pouvant être consulté à distance par interrogation d'un serveur ;
- de rappeler automatiquement par le terminal de l'abonné appelé, le dernier appelant en cas d'absence de réponse de l'appelé.

De telles facilités permettent certes à l'abonné appelé de prendre connaissance d'un appel. Toutefois, les indications fournies à l'abonné appelé restent limitées à un seul numéro appelant, lorsqu'une telle indication de numéro est prévue.

Par ailleurs, bien que les messages vocaux offrent la possibilité à la personne appelant, de mentionner son propre numéro d'appel, celle-ci peut oublier de le faire.

Enfin, les indications fournies à l'abonné appelé sont liées au terminal répondant au numéro appelé, ce qui nécessite la présence de l'abonné appelé pour en prendre connaissance.

L'invention vise à obtenir un procédé et un dispositif palliant les inconvénients de l'état de la technique.

Un premier objet de l'invention est un procédé d'indication à un abonné du téléphone qu'un numéro d'appel a été appelé, dans lequel :
- on mémorise dans une mémoire associée au numéro appelé, le numéro du dernier appelant ayant appelé ledit numéro appelé;
caractérisé en ce que pour l'indication à l'abonné appelé,
(a) on transfère, après chaque mémorisation dans la mémoire, le numéro mémorisé à une base de données associée à l'abonné appelé et apte à stocker de manière permanente plusieurs numéros transférés,
(b) on stocke dans la base de données associée à l'abonné appelé, des numéros transférés, et
(c) on envoie, après au moins un transfert, au moins un message à au moins un numéro de contact prédéterminé et associé à l'abonné appelé, le message contenant une indication associée à au moins un numéro d'appelant stocké dans la base de données.

Grâce à l'invention, on peut indiquer automatiquement à un abonné, plusieurs numéros correspondant à plusieurs appels reçus sur le terminal de l'abonné appelé. En outre, cette indication est compatible avec les facilités existantes mentionnées ci-dessus. L'indication peut être fournie à l'abonné indépendamment de son terminal ayant été appelé.

Suivant une caractéristique de l'invention, on mémorise au préalable, dans une table, des informations permettant d'identifier les abonnés pour lesquels l'indication selon les étapes (a), (b) et (c) mentionnées doit être effectuée, et on exécute ces étapes (a), (b) et (c), lorsque le numéro appelé correspond à l'une des informations mémorisées dans la table.

Il est ainsi permis de n'exécuter le procédé que si l'abonné appelé souhaite en bénéficier et de sélectionner les numéros appelés pour lesquels le procédé est exécuté.

Suivant une autre caractéristique de l'invention, permettant de n'indiquer à l'appelé appelé que des informations sur le dernier appelant, on mémorise dans une deuxième mémoire associée au numéro appelé, le numéro du dernier appelant ayant appelé ledit numéro d'appel, de manière à ne garder que ce numéro d'appelant.

Par exemple, les messages sont envoyés sous forme vocale ou d'affichage sur un écran au numéro prédéterminé de contact.

Suivant une caractéristique de l'invention, simple à mettre en oeuvre, l'indication contenue dans le message envoyé comprend le numéro d'appelant stocké dans la base de données.

Suivant une caractéristique de l'invention, permettant d'enrichir le sens du message pour une personne le recevant, l'indication contenue dans le message envoyé comprend une information en plus du numéro de l'appelant, mémorisée au préalable et associée au numéro de l'appelant stocké dans la base de données.

Afin de rendre plus conviviale l'indication fournie à l'abonné, il est prévu, suivant une caractéristique de l'invention, que l'indication contenue dans le message envoyé comprend le nom de l'appelant, mémorisé au préalable et associé au numéro de l'appelant stocké dans la base de données.

Suivant une caractéristique de l'invention, permettant d'étendre les possibilités d'atteindre l'abonné appelant, l'indication contenue dans le message envoyé comprend une adresse de messagerie électronique, mémorisée au préalable et associée au numéro de l'appelant stocké dans la base de données.

Suivant une caractéristique de l'invention, l'indication contenue dans le message envoyé comprend un identifiant de messagerie instantanée, mémorisé au préalable et associé au numéro de l'appelant stocké dans la base de données.

Suivant une caractéristique de l'invention, l'indication contenue dans le message envoyé comprend une information personnalisable, mémorisée au préalable et associée au numéro de l'appelant stocké dans la base de données.

Suivant une caractéristique de l'invention, garantissant que le message envoyé soit bien reçu, l'on envoie un nombre présélectionné de messages vocaux à intervalles de temps présélectionnés l'un de l'autre, jusqu'à ce que le numéro de contact réponde.

Afin de pouvoir recevoir les indications à distance du terminal connecté au numéro appelé, il est prévu, suivant une caractéristique de l'invention, que le numéro prédéterminé de contact soit différent du numéro appelé. Bien entendu, le numéro de contact peut être également le numéro appelé.

Suivant une caractéristique de l'invention, permettant à l'abonné de modifier le numéro de contact auquel il souhaite recevoir les indications, le numéro de contact est apte à être modifié de l'extérieur.

Un deuxième objet de l'invention est un dispositif d'indication à un abonné du téléphone qu'un numéro d'appel a été appelé, comportant au moins un centre de commutation auquel est associée une première mémoire du numéro d'appelant, associée au numéro appelé, caractérisé en ce qu'il comprend en outre:
- une base de données, associée à l'abonné appelé, dans laquelle est mémorisé au moins un numéro de contact prédéterminé et associé à l'abonné appelé, la base de données comprenant une zone de stockage de manière permanente de plusieurs numéros d'appel ;
- un moyen de transfert du numéro d'appel mémorisé dans la première mémoire à la zone de stockage de la base de données ; et
- un moyen d'émission d'au moins un message à destination du numéro de contact prédéterminé, contenant une indication associée à au moins un numéro présent dans la zone de stockage de la base de données.

Suivant une autre caractéristique de l'invention, il est associé au centre de commutation une table comprenant un champ dans lequel sont mémorisées des informations permettant d'identifier les abonnés pour lesquels le message doit être émis et un moyen de comparaison du numéro appelé au numéro correspondant aux informations mémorisées dans le champ de la table, provoquant, en cas d'égalité, la mémorisation dans la première mémoire du numéro d'appelant.

Suivant une autre caractéristique de l'invention, il est associé au centre de commutation une deuxième mémoire, associée au numéro appelé, dans laquelle sont mémorisées des informations permettant d'identifier le numéro de l'appelant, la deuxième mémoire étant telle que seules les informations associées au dernier appelant y sont mémorisées.

Suivant une caractéristique de l'invention, permettant de stocker à distance des numéros d'appelant, la base de données est reliée au centre de commutation par l'intermédiaire d'au moins un centre de commutation de transit.

Suivant une autre caractéristique de l'invention, étendant la souplesse d'utilisation du dispositif, les moyens d'émission comprennent un serveur vocal interactif des messages, relié à la base de données, des moyens de modification du numéro prédéterminé de contact mémorisé par la base de données étant prévus.

Suivant une autre caractéristique de l'invention, assurant une confidentialité des messages, les moyens d'émission comprennent un système de sécurité à code confidentiel permettant d'émettre le au moins un message à destination du numéro de contact en réponse à la transmission par le numéro de contact du code confidentiel.

L'invention sera mieux comprise à la lecture de la description qui va suivre, donnée uniquement à titre d'exemple et faite en se référant aux dessins annexés, sur lesquels :
- la figure 1 est un schéma d'une partie d'un réseau téléphonique dans lequel le dispositif et le procédé d'indication suivant l'invention sont mis en oeuvre ;
- la figure 2 est un schéma montrant le trajet de l'information relative au numéro appelant suivant l'invention ;
- la figure 3 est un schéma de la table locale prévue dans le centre de commutation d'arrivée d'un appel suivant l'invention ; et

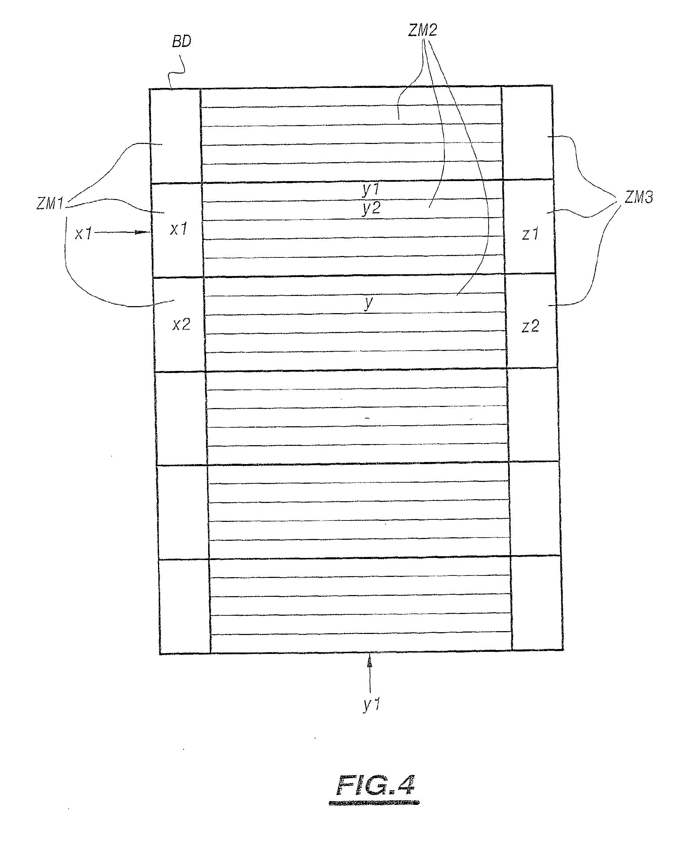

- la figure 4 est un schéma de la base de données utilisée suivant l'invention.

L'invention va être décrite ci-après en référence à un réseau téléphonique, par exemple du type réseau téléphonique commuté (RTC). Bien entendu, l'invention est applicable à tout type de réseau de télécommunication, et en particulier à des réseaux de télécommunication entre tout type de terminaux, pouvant être autres que des terminaux téléphoniques, et par exemple entre des ordinateurs.

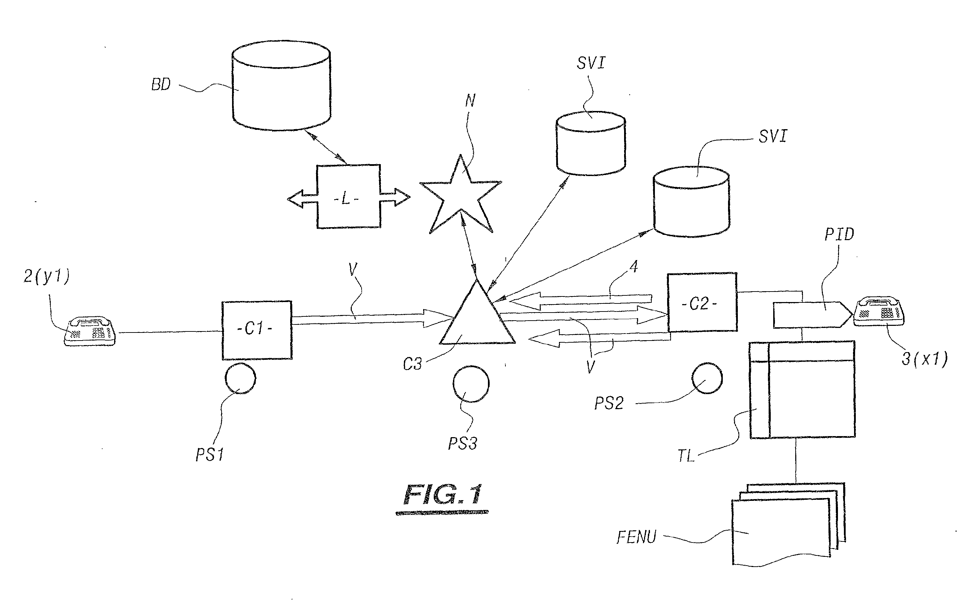

La figure 1 montre un réseau téléphonique 1 permettant d'établir une communication entre plusieurs terminaux téléphoniques, dont deux terminaux 2,3 sont représentés. Bien entendu, l'invention est applicable à un réseau 1 comportant plus de deux terminaux. Les terminaux 2,3 sont par exemple des postes téléphoniques fixes. Toutefois, les terminaux 2 et/ou 3 peuvent également être des téléphones portables. Le terminal 2 possède le numéro d'appel téléphonique y1, tandis que le terminal 3 possède le numéro d'appel téléphonique x1 différent dey1 .

On suppose que le terminal 2, dénommé appelant, appelle le terminal 3, dénommé appelé, à son numéro d'appel x1 en vue de l'établissement d'une ligne de communication entre les terminaux 2 et 3.

Le terminal appelant 2 est relié à un centre de commutation de départ C1, tandis que le terminal 3 est relié à un centre de commutation d'arrivée C2. Les centres de commutation de départ et d'arrivée C1, C2, sont reliés entre eux par un ou plusieurs noeuds et mailles de communication, dont seul le centre de commutation de transit C3 est représenté.

Des lignes de communication de signaux vocaux V, représentées par des flèches épaisses à la figure 1, sont aptes à être établies entre les centres de commutation C1, C2 et C3. Des points de signalisation sémaphores PS1, PS2 sont associés aux centres de commutation C1, C2 et sont aptes à transmettre et à recevoir, via le réseau de signalisation, le numéro appelant y1, le numéro appelé x1 ainsi que le chemin que doit emprunter le signal vocal V à travers le réseau entre les centres de commutation de départ et d'arrivée C1 et C2.

Le centre C2 de commutation d'arrivée comporte, en aval du point de signalisation PS2, un moyen PID de présentation de l'identité du demandeur, apte à transmettre et à faire afficher sur l'écran du terminal 3, lorsqu'il en comporte un, le numéro y1 d'appel appelant et le cas échéant, une information supplémentaire associée au numéro appelant et mémorisée dans le terminal appelé 3, par exemple le nom de l'abonné correspondant au numéro appelant.

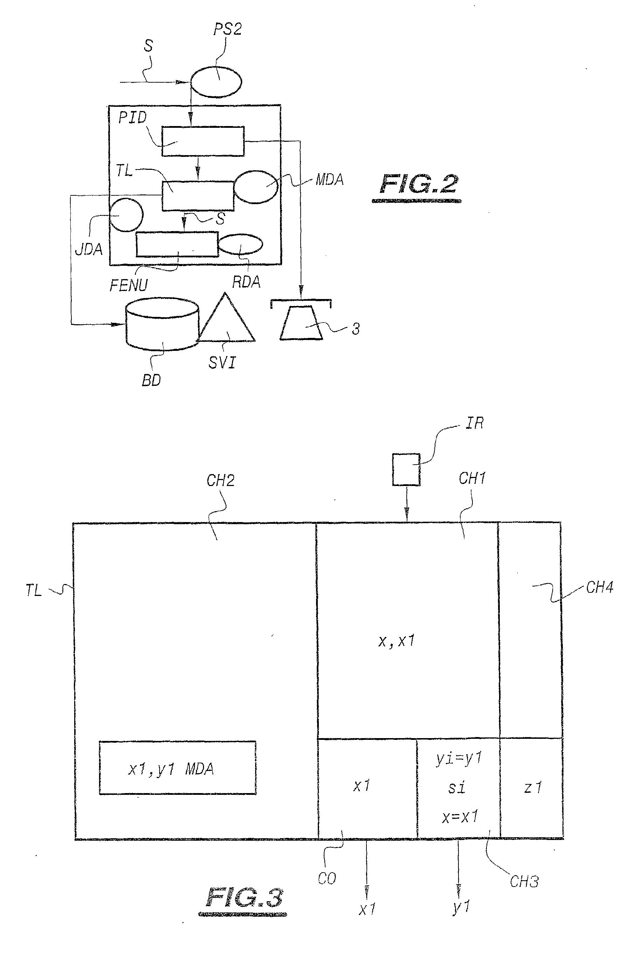

En aval du moyen PID de présentation est prévue une table TL, dite table locale TL, comportant, ainsi que représenté à la figure 3, un premier champ CH1 de mémorisation de numéros x d'abonnés présélectionnés. La table TL est associée au centre C2 de commutation et en fait partie ainsi que représenté, ou est reliée à celui-ci par tout moyen approprié de télécommunication. Un moyen IR d'introduction et de retrait de numéros x d'abonnés dans le premier champ CH1 est prévu dans la table TL.

Le réseau de signalisation sémaphore est apte à transporter, du point de signalisation PS1 au point de signalisation PS2, un signal S de signalisation comportant, en plus du numéro x1 d'abonné appelé, du numéro y1 d'abonné appelant et du chemin du signal vocal V, une instruction JDA de signalisation de journal des appelants composée d'une première instruction MDA de signalisation de mémorisation du numéro d'appelant et d'une deuxième instruction RDA de rappel du dernier appelant. Les instructions JDA, MDA et RDA sont présentes dans le langage et le protocole de signalisation utilisés.

La table locale TL comporte en outre un deuxième champ CH2 de réception, à partir du point de signalisation PS2, du numéro appelé x1, du numéro appelant y1 et de la première instruction MDA et un comparateur CO du numéro d'abonné appelé x1 présent dans le deuxième champ CH2 de la table locale aux numéros d'abonné x présents dans le premier champ CH1 de la table locale TL, la comparaison étant effectuée par exemple par défilement du numéro x1 devant les numéros x.

La première instruction MDA de signalisation de mémorisation du numéro d'appelant provoque, en cas de résultat d'égalité entre un numéro d'abonné appelé présent dans le premier champ CH1 avec le numéro d'abonné appelé x présent dans le deuxième champ CH2, fourni par le comparateur CO, la mémorisation dans un troisième champ CH3 du numéro appelant y1 présent dans le deuxième champ CH2.

La mémorisation dans le troisième champ CH3 d'un numéro appelanty1 , provoque, par une routine logicielle, le transfert du numéro présent dans le troisième champ CH3 de la table locale TL et du numéro appelé x1 présent dans le deuxième champ CH2 à une base de données BD distincte de la table locale TL du centre de commutation d'arrivée C2.

La base de données BD est reliée à la table locale TL par des lignes L et noeuds N de communication, comprenant par exemple le centre C3 de commutation de transit.

La base de données BD comporte une première zone ZM1 de mémorisation de numéros d'abonné x appelés, des deuxièmes zones ZM2 de mémorisation de numéros y1 appelants associées respectivement aux numéros x d'appelé présents dans la première zone de mémoire ZM1 et des troisièmes zones ZM3 de mémorisation de numéros d'appel de contact, associées respectivement aux numéros x d'appelé présents dans la première zone de mémoire ZM1.

Chaque deuxième zone ZM2 de mémoire associée à un numéro appelé x, x1, x2 de la première zone ZM1 de mémoire, a une capacité de mémorisation prédéterminée de plusieurs numéros appelants y, par exemple de vingt numéros appelants y et est par exemple du type premier entré - dernier sorti.

Le numéro y1 issu du troisième champ CH3 de mémorisation de la table locale TL et transféré dans la base de données BD est mémorisé dans la deuxième zone de mémoire ZM2 associée au numéro appelé x1 correspondant au numéro x1 reçu par la base de données BD et transféré depuis la table locale TL.

Des moyens de commande de la base de données BD sont prévus pour provoquer, à chaque nouvelle mémorisation d'un numéro appelant y dans une deuxième zone de mémoire ZM2, l'envoi d'un message à destination du numéro d'appel présent dans la troisième zone de mémoire ZM3 associée.

Il est prévu un serveur vocal interactif SVI relié par une liaison de communication avec la base de données BD, de manière à envoyer un message M contenant une indication des numéros d'appel y1, y2 mémorisés dans la deuxième zone de mémoire ZM2 associée au numéro x1 appelé, au numéro de contact z1 mémorisé dans la zone de mémoire ZM3 associée au numéro appelé x1 présent dans la première zone de mémoire ZM1. Ces indications peuvent comprendre, en remplacement ou en supplément du numéro y1 d'appel mémorisé dans la deuxième zone ZM2 de mémoire, le nom des abonnés correspondant à ces numéros d'appel y1, et/ou une adresse de messagerie électronique, mémorisée au préalable et associée au numéro y1 de l'appelant stocké dans la deuxième zone ZM2 de mémoire, et/ou un identifiant de messagerie instantanée, mémorisé au préalable et associé au numéro y1 de l'appelant stocké dans deuxième zone ZM2 de mémoire, et/ou une information personnalisable mémorisée au préalable et associée au numéro y1 de l'appelant stocké dans la deuxième zone ZM2 de mémoire. Ces informations autres que le numéro y1 appelant sont par exemple mémorisées, en association avec le numéro d'appel y1, dans une mémoire prévue dans le serveur SVI. Ces informations sont obtenues par le serveur SVI par interrogation de sa mémoire à l'adresse correspondant au numéro d'appelant y1 présent dans la deuxième zone ZM2 de mémoire.

Chaque troisième zone de mémoire ZM3 peut être de taille telle qu'il y est mémorisé une pluralité de numéros z de contact différents pour un même abonné appelé x et peut être du type premier entré - dernier sorti. Ainsi, le message M est envoyé à un premier numéro de contact mémorisé dans la troisième de mémoire ZM3, puis, en l'absence de réponse de ce premier numéro de contact, à un second numéro de contact mémorisé dans cette même troisième zone de mémoire ZM3, et ainsi de suite à chaque numéro de contact mémorisé dans la troisième zone ZM3, jusqu'à ce qu'un des numéros de contact z mémorisés dans la troisième zone de mémoire ZM3 associée au numéro appelé x1 réponde.

Il peut également prévu que le même message M soit envoyé à un numéro de contact z1 mémorisé dans la troisième zone de mémoire ZM3 associée au numéro appelé x1, un nombre prédéterminé de fois, jusqu'à ce que le numéro de contact z1 appelé, réponde. Ce nombre prédéterminé d'envois du message est par exemple effectué seulement si il est vérifié que le numéro de contact est un poste téléphonique fixe et non mobile, la vérification étant effectuée à partir des chiffres constituant le numéro z1 de contact. Ce nombre prédéterminé d'envois du message et/ou la période de la journée au cours de laquelle il sera effectué, est par exemple choisi au préalable par l'utilisateur du service.

Des moyens sont prévus dans le serveur vocal interactif SVI pour modifier dans la troisième zone de mémoire ZM3 de la base de données BD, associée au numéro appelé x1, le ou les numéros de contact z1 qui y sont mémorisés. Il peut être prévu que ce numéro de contact z1 peut être modifié directement par l'utilisateur par envoi d'un message, par exemple vocal ou provoqué par l'appui de touches d'un terminal, au serveur vocal interactif SVI. Il est par exemple prévu un système de sécurité à code confidentiel, non représenté, permettant d'émettre les messages à destination du numéro z1 de contact en réponse à la transmission par le numéro z1 de contact du code confidentiel. Le système de sécurité est par exemple prévu dans le serveur SVI, où le code confidentiel associé au numéro de contact est mémorisé et peut être choisi à distance par un utilisateur à l'invitation du serveur lors de la première utilisation du service.

La table locale TL comporte en outre un quatrième champ CH4 de mémorisation d'un numéro de contact z1 associé à chaque numéro x1 appelé mémorisé dans le premier champ CH1. Des moyens de modification de ce numéro de contact z1 mémorisé dans le quatrième champ CH4 de la table locale TL sont prévus, chaque numéro de contact z1 mémorisé dans le quatrième champ CH4 étant ensuite transféré, avec son numéro d'appelé x1 associé, dans la troisième zone de mémoire CH3 de la base de données BD associée pour y être mémorisé.

Le message M émis par le serveur vocal interactif à destination du numéro de contact z1 peuvent être vocaux, par exemple par synthèse vocale ou autre ou numérique provoquant un affichage sur un écran présent sur le terminal de communication connecté au numéro de contact z1.

Les numéros de contact z présents dans la troisième zone de mémoire ZM3 associée au numéro appelé x1, peuvent être différents du numéro appelé x1 associé présent dans la première zone de mémoire ZM1 de la base de données BD, permettant un suivi à distance des appels reçus par le numéro appelé x1.

Il peut être prévu que le numéro de contact z1 mémorisé dans la troisième zone de mémoire ZM3, soit, à défaut de modification, le numéro appelé x1 auquel la troisième zone de mémoire ZM3 est associée.

Il est prévu, dans le centre de commutation d'arrivée C2, en aval de la table locale TL, un fichier FENU associé à chaque numéro appelé x1 et dans lequel n'est mémorisé que le dernier numéro appelant y1 par la deuxième instruction RDA de rappel du dernier appelant.

La table locale TL est placée en amont du fichier FENU pour l'acheminement du signal S de signalisation, la première instruction MDA de signalisation de mémorisation du numéro d'appelant étant rendue prioritaire sur la deuxième instruction RDA de rappel du dernier appelant.

Le fichier FENU est tel que tout nouveau signal S qui lui est envoyé contenant un numéro appelant y1 associé à un numéro appelé x1, remplace dans le fichier FENU tout ancien numéro d'appelant y qui était mémorisé dans ce fichier.

Ce numéro d'appelant y1 mémorisé dans le fichier FENU associé au numéro d'appelé x1 est appelé et mis en communication automatiquement avec ce numéro appelé x1 lorsqu'un utilisateur actionne un bouton de commande prédéterminé ou compose un code prédéterminé sur le terminal 3 connecté au numéro appelé x1.

## Revendications

1. Procédé d'indication à un abonné du téléphone qu'un numéro (x1) d'appel a été appelé, dans lequel :
- on mémorise dans une mémoire (CH3) associée au numéro appelé (x1), le numéro (y1) du dernier appelant ayant appelé ledit numéro (x1) appelé;
**caractérisé en ce que** pour l'indication à l'abonné appelé,
(a) on transfère automatiquement, après chaque mémorisation dans la mémoire (CH3), le numéro (y1) mémorisé à une base (BD) de données associée à l'abonné (x1) appelé et apte à stocker de manière permanente plusieurs numéros (y) transférés,
(b) on stocke dans la base (BD) de données associée à l'abonné (x1) appelé, des numéros (y) transférés, et
(c) on envoie automatiquement, après au moins un transfert, au moins un message (M) à au moins un numéro (z1) de contact prédéterminé et associé à l'abonné appelé (x1), le message (M) contenant une indication associée à au moins un numéro (y1) d'appelant stocké dans la base (BD) de données.

2. Procédé d'indication suivant la revendication 1, **caractérisé en ce que** ledit message (M) est envoyé au au moins un numéro (z1) de contact prédéterminé à chaque nouveau stockage d'un numéro transféré (y) dans la base (B1) de données.

3. Procédé d'indication selon la revendication 1 ou 2, **caractérisé en ce que** l'on mémorise au préalable dans une table (TL), des informations (x1) permettant d'identifier des abonnés pour lesquels l'indication selon les étapes (a), (b) et (c) doit être effectuée et on exécute les étapes (a), (b) et (c) lorsque le numéro appelé (x1) correspond à l'une (x1) des informations mémorisées dans la table locale (TL).

4. Procédé d'indication selon l'une quelconque des revendications précédentes, **caractérisé en ce qu'**on mémorise dans une deuxième mémoire (FENU) associée au numéro appelé (x1), le numéro (y1) du dernier appelant ayant appelé ledit numéro (x1) d'appel, de manière à ne garder que ce numéro (y1) d'appelant.

5. Procédé d'indication selon l'une quelconque des revendications précédentes, **caractérisé en ce que** les messages (M) sont envoyés sous forme vocale ou d'affichage sur un écran au numéro (z1) de contact.

6. Procédé d'indication selon l'une quelconque des revendications précédentes, **caractérisé en ce que** l'indication contenue dans le message (M) envoyé comprend le numéro (y1) d'appelant stocké dans la base (BD) de données.

7. Procédé d'indication selon la revendication 6, **caractérisé en ce que** l'indication contenue dans le message (M) envoyé comprend une information en plus du numéro (y1) de l'appelant, mémorisée au préalable et associée au numéro (y1) de l'appelant stocké dans la base (BD) de données.

8. Procédé d'indication selon l'une quelconque des revendications précédentes, **caractérisé en ce que** l'indication contenue dans le message (M) envoyé comprend le nom de l'appelant, mémorisé au préalable et associé au numéro (y1) de l'appelant stocké dans la base (BD) de données.

9. Procédé d'indication selon l'une quelconque des revendications précédentes, **caractérisé en ce que** l'indication contenue dans le message (M) envoyé comprend une adresse de messagerie électronique, mémorisée au préalable et associée au numéro (y1) de l'appelant stocké dans la base (BD) de données.

10. Procédé d'indication selon l'une quelconque des revendications précédentes, **caractérisé en ce que** l'indication contenue dans le message (M) envoyé comprend un identifiant de messagerie instantanée, mémorisé au préalable et associé au numéro (y1) de l'appelant stocké dans la base (BD) de données.

11. Procédé d'indication selon l'une quelconque des revendications précédentes, **caractérisé en ce que** l'indication contenue dans le message (M) envoyé comprend une information personnalisable, mémorisée au préalable et associée au numéro (y1) de l'appelant stocké dans la base (BD) de données.

12. Procédé d'indication selon l'une quelconque des revendications précédentes, **caractérisé en ce que** l'on envoie un nombre présélectionné de messages (M) à intervalles de temps présélectionnés l'un de l'autre audit au moins un numéro (z1) de contact prédéterminé, jusqu'à ce qu'un numéro (z1) de contact réponde.

13. Procédé d'indication selon l'une quelconque des revendications 1 à 11, **caractérisé en ce qu'**une pluralité de numéros (z1) de contact prédéterminés sont prévus, et le message (M) est envoyé successivement aux numéros (z1) de contact de ladite pluralité, tant que les numéros (z1) de contact de ladite pluralité, auxquels le message (M) a été envoyé, ne répondent pas.

14. Procédé d'indication selon l'une quelconque des revendications précédentes, **caractérisé en ce que** le numéro (z1) de contact est différent du numéro (x1) appelé.

15. Procédé d'indication selon l'une quelconque des revendications 1 à 13, **caractérisé en ce que** le numéro (z1) de contact est égal au numéro (x1) appelé.

16. Procédé d'indication suivant l'une quelconque des revendications précédentes, **caractérisé en ce que** le numéro (z1) de contact est apte à être modifié de l'extérieur et est enregistré au préalable.

17. Dispositif (1) d'indication à un abonné du téléphone qu'un numéro (x1) d'appel a été appelé, comportant au moins un centre (C2) de commutation, auquel est associée une première mémoire (CH3) du numéro (y1) d'appelant, associée au numéro (x1) appelé, **caractérisé en ce qu'**il comprend en outre :
- une base (BD) de données associée à l'abonné (x1) appelé, dans laquelle est mémorisé au moins un numéro (z1) de contact prédéterminé et associé à l'abonné (x1) appelé, la base (BD) de données comprenant une zone (ZM2) de stockage de manière permanente de plusieurs numéros (y) d'appel ;
- un moyen de transfert automatique du numéro (y1) d'appel mémorisé dans la première mémoire (CH3) à la zone (ZM2) de stockage de la base de données (BD) ; et
- un moyen (SVI) d'émission automatique d'au moins un message (M) à destination du numéro (z1) de contact prédéterminé, contenant une indication associée à au moins un numéro (y1) présent dans la zone (ZM2) de stockage de la base (BD) de données.

18. Dispositif (1) d'indication selon la revendication 17, **caractérisé en ce que** des moyens de commande de la base (BD) de données sont prévus pour provoquer, à chaque nouveau stockage d'un numéro (y1) d'appel dans la zone (zM2) de stockage de la base (BD) de données, l'émission automatique par le moyen (SVI) d'émission dudit au moins un message (M) à destination dudit numéro (z1) de contact prédéterminé.

19. Dispositif (1) d'indication selon la revendication 17 ou 18, **caractérisé en ce qu'**il est associé au centre (C2) de commutation une table (TL) comprenant un champ (CH1) dans lequel sont mémorisées des informations (x) permettant d'identifier les abonnés pour lesquels le message (M) doit être émis et un moyen (CO) de comparaison du numéro appelé (x1) au numéro (x) correspondant aux informations mémorisées dans le champ (CH1) de la table (TL), et apte à provoquer, en cas d'égalité, la mémorisation dans la première mémoire (CH3) du numéro (y1) d'appelant.

20. Dispositif (1) d'indication selon l'une quelconque des revendications 17 et 19, **caractérisé en ce qu'**il est associé au centre (C2) de commutation une deuxième mémoire (FENU), associée au numéro appelé (x1), dans laquelle sont mémorisées des informations permettant d'identifier le numéro (y1) de l'appelant, la deuxième mémoire (FENU) étant telle que seules les informations associées au dernier appelant (y1) y sont mémorisées.

21. Dispositif (1) d'indication selon l'une quelconque des revendications 17 à 20, **caractérisé en ce que** la base (BD) de données est reliée au centre (C2) de commutation par l'intermédiaire d'au moins un centre (C3) de commutation de transit.

22. Dispositif (1) d'indication selon l'une quelconque des revendications 17 à 21, **caractérisé en ce que** les moyens (SVI) d'émission comprennnent un serveur vocal interactif (SVI) des messages (M), relié à la base de données (BD), des moyens de modification du numéro (z1) de contact mémorisé dans la base (BD) de données étant prévus.

23. Dispositif (1) d'indication selon l'une quelconque des revendications 17 à 22, **caractérisé en ce que** les moyens (SVI) d'émission sont tels que l'indication contenue dans le message (M) émis comprend le numéro (y1) d'appelant stocké dans la base (BD) de données.

24. Dispositif (1) d'indication selon la revendication 23, **caractérisé en ce que** les moyens (SVI) d'émission sont tels que l'indication contenue dans le message (M) émis comprend une information en plus du numéro (y1) de l'appelant, mémorisée au préalable et associée au numéro (y1) de l'appelant stocké dans la base (BD) de données.

25. Dispositif (1) d'indication selon l'une quelconque des revendications 17 à 24, **caractérisé en ce que** les moyens (SVI) d'émission sont tels que l'indication contenue dans le message (M) émis comprend le nom de l'appelant, mémorisé au préalable et associé au numéro (y1) de l'appelant stocké dans la base (BD) de données.

26. Dispositif (1) d'indication selon l'une quelconque des revendications 17 à 25, **caractérisé en ce que** les moyens (SVI) d'émission sont tels que l'indication contenue dans le message (M) émis comprend une adresse de messagerie électronique, mémorisée au préalable et associée au numéro (y1) de l'appelant stocké dans la base (BD) de données.

27. Dispositif (1) d'indication selon l'une quelconque des revendications 17 à 26, **caractérisé en ce que** les moyens (SVI) d'émission sont tels que l'indication contenue dans le message (M) émis comprend un identifiant de messagerie instantanée, mémorisé au préalable et associé au numéro (y1) de l'appelant stocké dans la base (BD) de données.

28. Dispositif (1) d'indication selon l'une quelconque des revendications 17 à 27, **caractérisé en ce que** les moyens (SVI) d'émission sont tels que l'indication contenue dans le message (M) émis comprend une information personnalisable, mémorisée au préalable et associée au numéro (y1) de l'appelant stocké dans la base (BD) de données.

29. Dispositif (1) d'indication selon l'une quelconque des revendications 17 à 28, **caractérisé en ce que** le moyen (SVI) d'émission est tel qu'il envoie un nombre présélectionné de messages (M) à intervalles de temps présélectionnés l'un de l'autre, audit au moins un numéro (z1) de contact prédéterminé, jusqu'à ce qu'un numéro (z1) de contact réponde.

30. Dispositif (1) d'indication selon l'une quelconque des revendications 17 à 28, **caractérisé en ce qu'**une pluralité de numéros (z1) de contact prédéterminés sont mémorisés dans la base (BD) de données, et le moyen (SVI) d'émission est tel qu'il envoie successivement aux numéros (z1) de contact de ladite pluralité ledit message (M), tant que les numéros (z1) de contact de ladite pluralité, auxquels le message (M) a été envoyé, ne répondent pas.
